# EUROPEAN PATENT SPECIFICATION

(11) **EP 2 312 781 B1**
(45) Date of publication and mention of the grant of the patent: **29.08.2018**
(21) Application number: 09290785.6
(22) Date of filing: 15.10.2009
(51) Int. Cl.: H04J 14/02

(54) **Method for generating a set of protecting connections**
Verfahren zum Erzeugen eines Satzes von Schutzverbindungen
Procédé pour la génération d'un ensemble de connexions de protection

(43) Date of publication of application: 20.04.2011
(73) Proprietor: Provenance Asset Group LLC, Essex, CT 06426 (US)
(72) Inventor: Douville, Richard, 91620 Nozay (FR); Zami, Thierry, 91620 Nozay (FR); Morea, Annalisa, 91620 Nozay (FR)
(74) Representative: Croonenbroek, Thomas Jakob

(56) References cited:
- EP-A1- 1 821 439
- US-A1- 2004 193 724
- US-B1- 6 643 464

## Description

### BACKGROUND OF THE INVENTION

The present invention relates to the field of optical communication networks and in particular of protecting connections in transparent or semi-transparent optical networks. Transparent optical networks refer to networks wherein optical signals may be transmitted from source to destination without optoelectronic regeneration. In such networks, protection, which corresponds to a spare connection using a different path, is needed in case of failure of a connection in a link. Different kinds of protection are known in the state of the art:
- the 1+1 protection wherein for each working connection corresponds an active protecting connection such that in case of failure, the egress node has only to switch to the protecting connection. Such protection is very efficient and allows a fast protection but is very expensive in term of capital expenditure (CAPEX) costs.
- the 1:1 protection wherein for each working connection corresponds a computed protecting connection. However, said protecting connection is not activated such that an additional delay of activation is needed in case of failure.
- the M:N protection wherein for N working connections, M (with M<N) protecting connections are computed. Such solution has a lower CAPEX cost than the 1:1 protection scheme but also requires an activation delay.
- the full restoration protection wherein the protecting connections are computed at the time of the failure. Thus, such solution has the lowest CAPEX cost but also the largest protection time as it implies a computation delay in addition to the activation delay.

### SUMMARY OF THE INVENTION

It is therefore an object of the present invention to provide a method that reduces the protection delay and which has a reduced CAPEX cost with respect to the 1+1 protection scheme.

Thus, the present invention refers to a method for generating a set of protecting connections in an optical network in order to insure protection of a set of working connections, , said protecting connections having a path different from the working connections wherein the signals of at least two protecting connections having at least a partial common path are merged into a combined signal and are transmitted on common wavelength channel along said at least partial common path.

According to another aspect of the invention, the protecting connections corresponding to two working connections being in a common shared risk link group are transmitted on two different wavelength channels.

According to an additional aspect of the invention, a combined signal of merged signals corresponds to one of the merged signals or a fusion of the merged signals.

According to an additional aspect of the invention, combined signals are transmitted to the different destinations of the different protecting signals merged in said combined signals.

According to another aspect of the invention, in case of failure of a working connection, the corresponding protecting connection is set up by transmitting the corresponding protecting signal and blocking the other signals at the merging points along said protecting connection.

According to another embodiment of the present invention, the action of merging signals in a combined signal and on a common wavelength channel is achieved by wavelength selective switches (WSS).

According to another embodiment of the present invention, the action of merging signals in a combined signal and on a common wavelength channel is achieved by optical couplers.

According to a further embodiment of the present invention, the action of transmitting a combined signal to different destinations is achieved by wavelength selective switches (WSS).

According to a further embodiment of the present invention, the action of transmitting a combined signal to different destinations is achieved by optical couplers.

According to an additional embodiment of the present invention, the action of blocking signals at merging points along a protecting connection is achieved by wavelength selective switches (WSS).

The present invention also refers to a wavelength selective switch (WSS) comprising a plurality of inputs configured to receive protecting connections having at least a partial common path and a plurality of outputs configured to transmit protecting connections wherein it also comprises means configured to produce the fusion of at least two signals corresponding to protecting connections received on its inputs and means configured to transmit a signal resulting from said fusion on an output.

The present invention also refers to a wavelength selective switch (WSS) comprising a plurality of inputs configured to receive protecting connections having at least a partial common path and a plurality of outputs configured to transmit protecting connections wherein it also comprises means configured to broadcast a signal received on an input to at least two different outputs.

The present invention also refers to an optical cross-connect (OXC) comprising at least two wavelength selective switches (WSS) wherein said wavelength selective switches (WSS) are combined in order to allow the fusion of at least two received signals on a common output and the broadcasting of a received signal on at least two different outputs. EP 1821439 A1 discloses a device and method for combining/ recombining bits for generating a protection connection in a network.

US 6643464 B1 discloses a method for improving protection bandwidth efficiency which uses a protection ring for sharing some of the protection paths so as to overlap on a given link with other protection paths or other rings.

US 20040193724 A1 discloses a shared data network for path-based recovery by determining how much protection bandwidth has to be reserved on a first link for two protection paths in such a way that the protection bandwidth reserved on the first link is shared between the protection paths.

### BRIEF DESCRIPTION OF THE DRAWINGS

FIG.**1** is a diagram of a portion of a network comprising three working connections having disjoint paths.
FIG.**2** is a diagram of the network portion of Fig.1 wherein protecting connections are represented;
FIG.**3** is a diagram representing the combination of signals coming from different path into a single wavelength channel according to the present invention;
FIG.**4** is a diagram of an optical cross-connect realized by a WSS;
FIG.**5** is a diagram of the network portion of Fig.1 wherein combined protecting connections according to the present invention are represented;
FIG.**6** is a diagram of the network portion of Fig.1 represented the protection scheme in case of failure according to the present invention;

### DETAILED DESCRIPTION OF THE INVENTION

As used herein, the term "CAPEX" refers to the expression capital expenditure.

The embodiments of the present invention refer to a sharing of protection resources between several protecting connections in order to reduce the protection cost. Protecting connections having at least partial common path with at least another protecting connection are therefore gathered on a common protecting connection along the at least partial common path. As a consequence, all the protecting connections are active which allows to minimize the delay of the protection set up in case of failure. In order to gather signals corresponding to several connections, said signals are merged in a combined signal which is transmitted on a single wavelength channel.

In order to better understand the embodiments of the present invention, an example of protection based on such sharing protection will now be described.

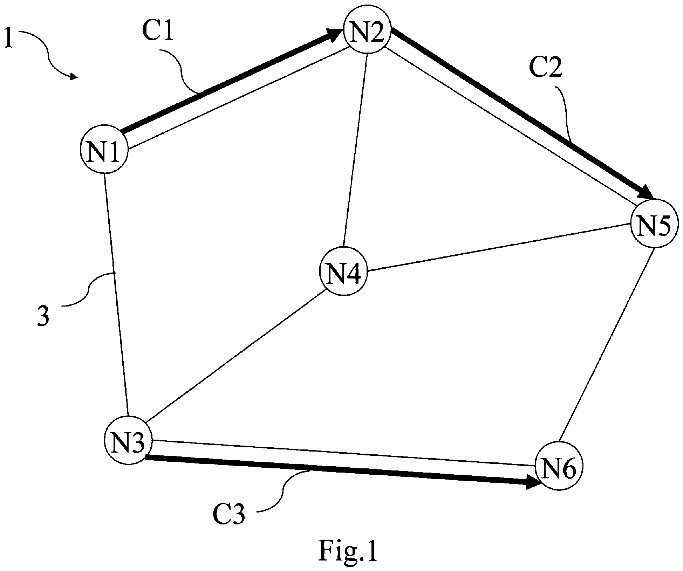

Fig.1 represents a portion of an optical network 1 comprising six nodes (N1, N2, N3, N4, N5, N6) connected by optical links 3. Three connections (C1, C2, C3) are established and correspond to working connections. In the present invention, it is supposed that C1, C2 and C3 have disjoint paths.

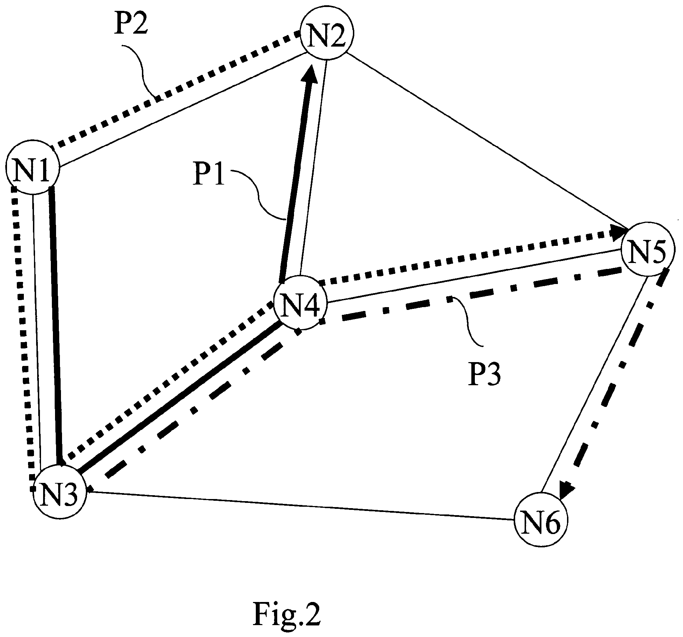

To provide protection to these working connections, protecting connections, corresponding to the connection of the source and the destination of the working connection but using a different path, have to be foreseen in order to provide sparing solutions in case of failure in a working connection. Such protecting connections (P1, P2, P3) are represented in Fig.2 according to the example of Fig.1. P1, P2 and P3 being respectively the protecting connections corresponding to C1, C2 and C3.

The configuration presented in Fig.1 and Fig.2 corresponds to a situation wherein working connections do not belong to a common shared risk link group and wherein the corresponding protecting connections have at least a partial common path. Working connections which do not belong to a common shared risk link group have paths that are partially or totally disjoint from each other such that the risk of both connection to have a failure at the same time is greatly reduced. Besides, the working and protecting connections are transmitted on the same wavelength channel and is the same for the three connections (which is possible thanks to the assumption that the working connections have disjoint path) in order to save CAPEX costs. In an alternate solution working connections may have different wavelength channel but their protecting connection are transmitted on the same wavelength channel as the other protecting channel having at least a partial common path.

Nevertheless, protecting connections having at least partial common path (N1-N3 for P1 and P2 and N3-N4 for P1, P2 and P3), problems occur as they are transmitted on the same wavelength channel and therefore cannot be multiplexed in order to be transmitted along their common paths.

In order to overcome this problem, according to the embodiments of the present invention, protecting signals are merged as a single combined signal in order to be transmitted along the common path.

In function of the equipment capabilities, different solutions exist concerning the combining of the merged signal.

In a first embodiment, it is supposed that the optical cross-connects located in the nodes of the network can perform transparent fusions by merging the received signals on a common output in order to produce the fusion of the received signals, the combined signal being then the cumulation of the received signals and can therefore be transmitted on a single wavelength channel.

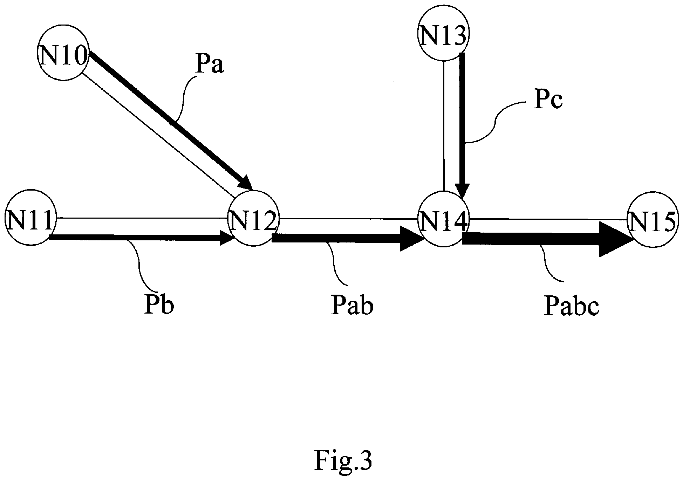

In order to better understand the fusion of merging signals, Fig.3 represents a portion of network wherein three signals Pa, Pb and Pc sent respectively from nodes N10, N11 and N13 are transmitted toward node N15. At node N12, Pa and Pb are combined to produce Pab and in node N14, Pab and Pc are combined to produce Pabc.

The signals Pab and Pabc may refer to different signals in function of the node configuration as described by the following equations:
Pab= F(Pa, Pb)={Pa, Pb or Pa+Pb} in node N12
Pabc=F(Pab, Pc)={Pab, Pc or Pab+Pc}={Pa, Pb, Pa+Pb , Pc, Pa+Pc, Pb+Pc or Pa+Pb+Pc} in node N14.
where F(Pa, Pb) is the combination of Pa and Pb and may correspond to Pa or Pb or a fusion of Pa and Pb (noted Pa+Pb) in function of the selected configuration.

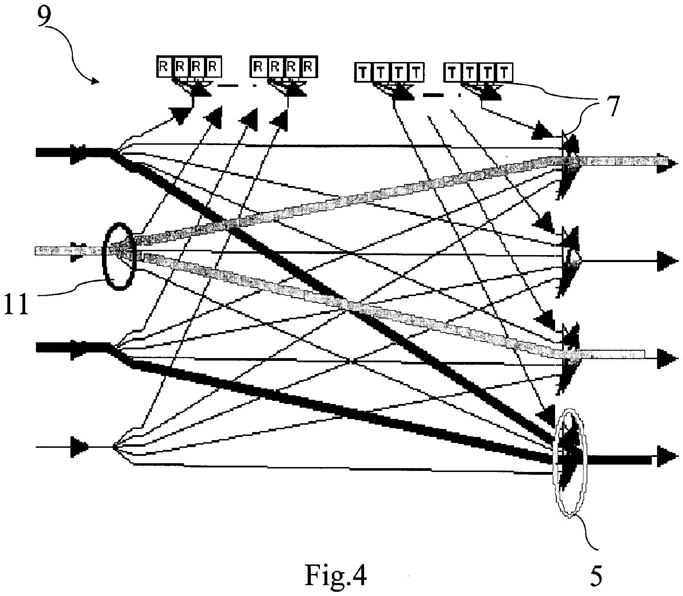

Such fusion 5 can be achieved, for example, by wavelength selective switches (WSS) 7 such as presented in the optical cross connect 9 described in Fig.4. Thus, in such embodiment, the combined signal may to one of the merged protecting signals or the fusion of said merged protecting signals.

In another embodiment, only one of the protecting signals can be transmitted as a combined signal along the common path due to the incapacity of the used WSS to perform a fusion of the incoming signals.

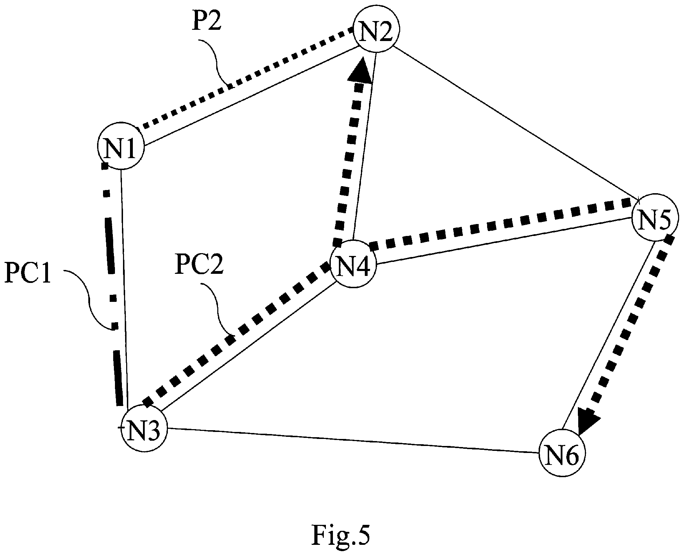

Thus, in the example of Fig.2, along the path N1-N3, protecting signals P1 and P2 are replaced by a combined signal PC1 as represented in Fig.5. In the same way, along the path N3-N4, P1, P2 and P3 are replaced by the combined signal PC2.

In node N4, P1 is transmitted toward N2 whereas P2 and P3 are transmitted toward N5. In order to get both connections active, the combined signal PC2 is split and broadcasted toward both directions. Such split 11 can also be achieved by wavelength selective switches (WSS) 7 as described in Fig.4. Thus, the combined signal PC2 is transmitted on one side to node N2 and on the other side to node N5 and then to node N6 as represented in Fig.5.

Besides, it has to be noted that amplifiers and equalizers can be used in order to adjust the signal power at the output of a node after a split 11 or a fusion 5.

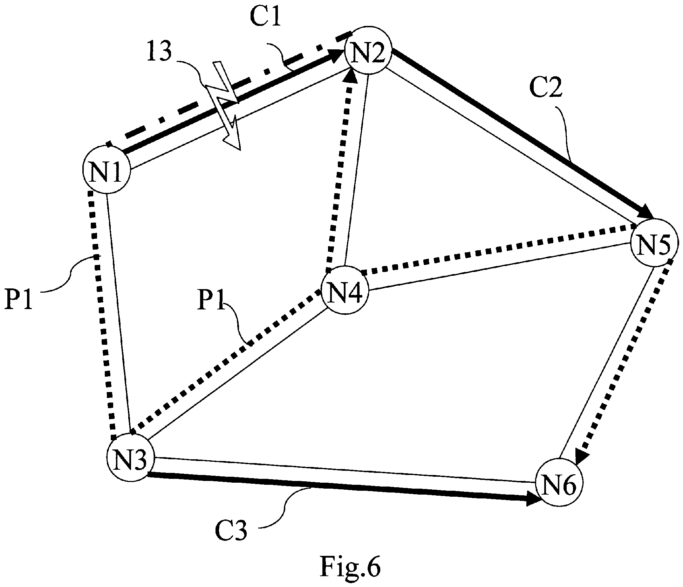

In case of failure 13 on a connection as for example on the link N1-N2 comprising the connection C1 as described in Fig.6, signals need to be transmitted on the corresponding protecting connection P1. Nevertheless, according to the previous step, the signal transmitted on the protecting connection along the path N1-N3-N4-N2 corresponds to a combined signal and not necessarily to the signal corresponding to the protecting connection P1.

The idea of the embodiments of the present invention is to block the other protecting signals along the path in order to retrieve the signal corresponding to P1 at node N2. Such blocking may be achieved by the filtering function of the wavelength selective switches (WSS) 7. Thus, at node N1, the signal corresponding to the protecting connection P2 is blocked such that the combined signal PC1 corresponds to the signal P1.

In the same way, at node N3, the signal corresponding to the protecting connection P3 is blocked such that the combined signal PC2 corresponds to the signal P1. As a consequence, the signal received at node N2 corresponds to the signal P1 and the failing connection C1 is therefore replaced by the protecting connection P1. Thus, as a protecting connection along the path N1-N3-N4-N2 is already activated before the failure, the delay of the protection is reduced and corresponds to the time required for the wavelength selective switches (WSS) 7 to be aware of the failure and to transmit the selected signal (P1 in the present example) and block the unselected signals (P2 and P3 in the present example) at the merging points along the path of the protecting connection corresponding to the selected protection.

In practice, when a failure arises, the signalization process according to the embodiments of the present invention refers to the following steps:
- At destination (at node N2 in the present example), the receiver of the protecting connection P1 is set in "reception mode" (even if the signal received on the channel does not correspond to the protecting signal P1).
- Signalization is sent from the destination node (N2) toward source node (N1) along the protection path (N2-N4-N3-N1) in order to trigger the blocking of the "undesired" protecting signals and the transmission of the "desired" protecting signal (P1) at the merging nodes (N1 and N3). It has to be noted that signalization does not have to wait at each node the completion of the required operations in the node and can be propagated directly to the subsequent nodes enabling thus pseudo-parallel operations. Furthermore, at the nodes where the combined signal is only split and broadcasted to different directions, no operation is necessary.
- When signalization arrives at the source node (N1 in the present case), the emitter of the protecting signal P1 knows that the protection is active and is used by the receiver of the destination node.
- Additionally, a signalization can be sent on the protection path from the source node at the reception of the alarm signal sent by the destination node after failure. This additional signalization allows to gain time in the protection set up when the delay to join the source node by the control plane (which transmit the alarm signal) is shorter than the delay of propagation of the signalization to join all the nodes requiring to block "undesired" signals.

In consequence, when all the nodes of the protection path are informed by the signalization of the failure of a connection and are configured in order to transmit the protecting signal corresponding to the failed connection while blocking the other protecting signals if said nodes correspond to a merging node, the protection is active and the connection between the source node and the destination node is re-established.

Thus, the embodiments of the present invention by sharing a wavelength channel between different protecting signals having at least a partial common path allow to reduce the CAPEX costs with respect to a 1+1 protection scheme (using a wavelength channel for each protecting signal) while providing a reduced protection delay with respect to the protection schemes in which the protecting signals are not active before failure. As a consequence, the offered protection solution provides a new trade-off allowing reducing the protection delay while limiting the cost of said protection.

## Claims

1. Method for generating a set of protecting connections (P1, P2, P3) in an optical network (1) in order to insure protection of a set of working connections (C1, C2, C3), said protecting connections (P1, P2, P3) having a path different from the working connections (C1, C2, C3) wherein:
- the working connections (C1, C2, C3) of the set have partially or totally disjoint paths,
- the protecting connections(P1, P2, P3) are transmitted on the same wavelength channel,
- the signals of at least two protecting connections (P1, P2, P3) having at least a partial common path are merged transparently into a combined signal (PC1, PC2) and are transmitted on a common wavelength channel along said at least partial common path.

2. Method for generating a set of protecting connections in an optical network in accordance with claim 1 wherein for two working connections being in a common shared risk link group, the corresponding protecting connections are transmitted on two distinct wavelength channels.

3. Method for generating a set of protecting connections in an optical network in accordance with claim 1 or 2 wherein a combined signal of merged signals corresponds to one of the merged signals or a cumulation of the merged signals.

4. Method for generating a set of protecting connections in an optical network in accordance with one of the previous claims wherein combined signals are transmitted to different destinations of the different protecting signals merged in said combined signals.

5. Method for generating a set of protecting connections in an optical network in accordance with one of the previous claims wherein in case of failure of a working connection, the corresponding protecting connection is set up by transmitting the corresponding protecting signal and blocking the other signals at the merging points along said protecting connection.

6. Method for generating a set of protecting connections in an optical network in accordance with one of the previous claims wherein the action of merging signals in a combined signal and on a common wavelength channel is achieved by wavelength selective switches "WSS" (7).

7. Method for generating a set of protecting connections in an optical network in accordance with one of the previous claims wherein the action of merging signals in a combined signal and on a common wavelength channel is achieved by optical couplers.

8. Method for generating a set of protecting connections in an optical network in accordance with one of the previous claims in combination with claim 4 wherein the action of transmitting a combined signal to different destinations is achieved by wavelength selective switches "WSS" (7).

9. Method for generating a set of protecting connections in an optical network in accordance with one of the previous claims in combination with claim 4 wherein the action of transmitting a combined signal to different destinations is achieved by optical couplers.

10. Method for generating a set of protecting connections in an optical network in accordance with one of the previous claims in combination with claim 5 wherein the action of blocking signals at merging points along a protecting connection is achieved by wavelength selective switches "WSS" (7).

11. Wavelength selective switch "WSS" (7) comprising a plurality of inputs configured to receive protecting connections (P1, P2, P3) having at least a partial common path and an output configured to transmit protecting connections (P1, P2, P3) wherein the said wavelength selective switch "WSS" also comprises means configured to produce a cumulation of at least two signals corresponding to protecting connections (P1, P2, P3) received on the inputs and means configured to transmit a signal resulting from said cumulation on the output.

12. Wavelength selective switch "WSS" (7) according to claim 11 wherein the said wavelength selective switch "WSS" also comprises means configured to broadcast a signal received on the input to at least two different outputs.

13. Optical cross-connect "OXC" (9) comprising at least one wavelength selective switch "WSS" (7) according to claim 11 and at least one wavelength selective switch "WSS" (7) according to claim 12 wherein said wavelength selective switches "WSS" (7) are combined in order to allow the cumulation of at least two received signals on a common output and the broadcasting of a received signal on at least two different outputs.

## Patentansprüche

1. Verfahren zum Erzeugen eines Satzes von Schutzverbindungen (P1, P2, P3) in einem optischen Netzwerk (1), um Schutz eines Satzes von Arbeitsverbindungen (C1, C2, C3) zu gewährleisten, wobei die Schutzverbindungen (P1, P2, P3) einen von den Arbeitsverbindungen (C1, C2, C3) unterschiedlichen Pfad aufweisen, wobei:
- die Arbeitsverbindungen (C1, C2, C3) des Satzes teilweise oder vollständig getrennte Pfade aufweisen,
- die Schutzverbindungen (P1, P2, P3) auf demselben Wellenlängenkanal gesendet werden,
- die Signale von mindestens zwei Schutzverbindungen (P1, P2, P3), die mindestens einen teilweise gemeinsamen Pfad aufweisen, transparent in ein Kombinationssignal (PC1, PC2) vereint und auf einem gemeinsamen Wellenlängenkanal entlang dem mindestens teilweise gemeinsamen Pfad gesendet werden.

2. Verfahren zum Erzeugen eines Satzes von Schutzverbindungen in einem optischen Netzwerk nach Anspruch 1, wobei für zwei Arbeitsverbindungen in einer gemeinsam genutzten Risikoverbindungsstreckengruppe die entsprechenden Schutzverbindungen auf zwei unterschiedlichen Wellenlängenkanälen gesendet werden.

3. Verfahren zum Erzeugen eines Satzes von Schutzverbindungen in einem optischen Netzwerk nach Anspruch 1 oder 2, wobei ein Kombinationssignal von vereinten Signalen einem der vereinten Signale oder einer Kumulation der vereinten Signale entspricht.

4. Verfahren zum Erzeugen eines Satzes von Schutzverbindungen in einem optischen Netzwerk nach einem der vorhergehenden Ansprüche, wobei Kombinationssignale an verschiedene Ziele der verschiedenen in den Kombinationssignalen vereinten Schutzsignale gesendet werden.

5. Verfahren zum Erzeugen eines Satzes von Schutzverbindungen in einem optischen Netzwerk nach einem der vorhergehenden Ansprüche, wobei im Falle eines Versagens einer Arbeitsverbindung die entsprechende Schutzverbindung durch Senden des entsprechenden Schutzsignals und Blockieren der anderen Signale an den Vereinigungspunkten entlang der Schutzverbindungen aufgesetzt wird.

6. Verfahren zum Erzeugen eines Satzes von Schutzverbindungen in einem optischen Netzwerk nach einem der vorhergehenden Ansprüche, wobei die Handlung des Vereinens von Signalen in ein Kombinationssignal und auf einem gemeinsamen Wellenlängenkanal durch wellenlängenselektive Schalter, WSS, (7) erreicht wird.

7. Verfahren zum Erzeugen eines Satzes von Schutzverbindungen in einem optischen Netzwerk nach einem der vorhergehenden Ansprüche, wobei die Handlung des Vereinens von Signalen in ein Kombinationssignal und auf einem gemeinsamen Wellenlängenkanal durch optische Koppler erreicht wird.

8. Verfahren zum Erzeugen eines Satzes von Schutzverbindungen in einem optischen Netzwerk nach einem der vorhergehenden Ansprüche im Kombination mit Anspruch 4, wobei die Handlung des Sendens eines Kombinationssignals an verschiedene Ziele durch wellenlängenselektive Schalter, WSS, (7) erreicht wird.

9. Verfahren zum Erzeugen eines Satzes von Schutzverbindungen in einem optischen Netzwerk nach einem der vorhergehenden Ansprüche im Kombination mit Anspruch 4, wobei die Handlung des Sendens eines Kombinationssignals an verschiedene Ziele durch optische Koppler erreicht wird.

10. Verfahren zum Erzeugen eines Satzes von Schutzverbindungen in einem optischen Netzwerk nach nach einem der vorhergehenden Ansprüche im Kombination mit Anspruch 5, wobei die Handlung des Blockierens von Signalen an Vereinigungspunkten entlang einer Schutzverbindung durch wellenlängenselektive Schalter, WSS, (7) erreicht wird.

11. Wellenlängenselektiver Schalter, WSS, (7), umfassend mehrere Eingänge, die ausgelegt sind zum Empfangen von Schutzverbindungen (P1, P2, P3), die mindestens einen teilweise gemeinsamen Pfad aufweisen, und einen Ausgang, der ausgelegt ist zum Senden von Schutzverbindungen (P1, P2, P3), wobei der WSS auch ein Mittel, das ausgelegt ist zum Erstellen einer Kumulation von mindestens zwei Signalen, die an den Eingängen empfangenen Schutzverbindungen (P1, P2, P3) entsprechen, und ein Mittel, das ausgelegt ist zum Senden eines sich aus der Kumulation ergebenden Signals an dem Ausgang, umfasst.

12. Wellenlängenselektiver Schalter, WSS, (7) nach Anspruch 11, wobei der WSS auch ein Mittel umfasst, das ausgelegt ist zum Rundsenden eines an dem Eingang empfangenen Signals an mindestens zwei verschiedene Ausgänge.

13. Optische Überkreuzverbindung, OXC, (9), umfassend mindestens einen wellenlängenselektiven Schalter, WSS, (7) nach Anspruch 11 und mindestens einen wellenlängenselektiven Schalter, WSS, (7) nach Anspruch 12, wobei die wellenlängenselektiven Schalter, WSS, (7) kombiniert sind, um die Kumulation von mindestens zwei empfangenen Signalen auf einem gemeinsamen Ausgang und das Rundsenden eines empfangenen Signals auf mindestens zwei verschiedenen Ausgängen zu erlauben.

## Revendications

1. Procédé de génération d'un ensemble de connexions de protection (P1, P2, P3) dans un réseau optique (1) afin d'assurer la protection d'un ensemble de connexions de travail (C1, C2, C3), lesdites connexions de protection (P1, P2, P3) ayant un chemin différent des connexions de travail (C1, C2, C3), :
- les connexions de travail (C1, C2, C3) de l'ensemble ayant des chemins partiellement ou totalement disjoints,
- les connexions de protection (P1, P2, P3) étant transmises sur le même canal de longueur d'onde,
- les signaux d'au moins deux connexions de protection (P1, P2, P3), ayant au moins un chemin commun partiel, étant fusionnés de manière transparente en un signal combiné (PC1, PC2) et étant transmis sur un canal de longueur d'onde commun le long dudit chemin commun au moins partiel.

2. Procédé de génération d'un ensemble de connexions de protection dans un réseau optique selon la revendication 1, les deux connexions de travail étant dans un groupe commun de liaisons à risque, les connexions de protection correspondantes étant transmises sur deux canaux de longueur d'onde distincts.

3. Procédé de génération d'un ensemble de connexions de protection dans un réseau optique selon la revendication 1 ou 2, un signal combiné de signaux fusionnés correspondant à l'un des signaux fusionnés ou à une accumulation des signaux fusionnés.

4. Procédé de génération d'un ensemble de connexions de protection dans un réseau optique selon l'une des revendications précédentes, les signaux combinés étant transmis à différentes destinations des différents signaux de protection fusionnés dans lesdits signaux combinés.

5. Procédé de génération d'un ensemble de connexions de protection dans un réseau optique selon l'une des revendications précédentes, en cas de défaillance d'une connexion de travail, la connexion de protection correspondante étant établie par transmission du signal de protection correspondant et blocage des autres signaux au niveau des points de fusion le long de ladite connexion de protection.

6. Procédé de génération d'un ensemble de connexions de protection dans un réseau optique selon l'une des revendications précédentes, l'action de fusion de signaux dans un signal combiné et sur un canal de longueur d'onde commun étant réalisée par des commutateurs sélectifs en longueur d'onde, WSS, (7).

7. Procédé de génération d'un ensemble de connexions de protection dans un réseau optique selon l'une des revendications précédentes, l'action de fusion de signaux dans un signal combiné et sur un canal de longueur d'onde commun étant réalisée par des coupleurs optiques.

8. Procédé de génération d'un ensemble de connexions de protection dans un réseau optique selon l'une des revendications précédentes en combinaison avec la revendication 4, l'action de transmission d'un signal combiné à différentes destinations étant réalisée par des commutateurs sélectifs en longueur d'onde, WSS, (7).

9. Procédé de génération d'un ensemble de connexions de protection dans un réseau optique selon l'une des revendications précédentes en combinaison avec la revendication 4, l'action de transmission d'un signal combiné à différentes destinations étant réalisée par des coupleurs optiques.

10. Procédé de génération d'un ensemble de connexions de protection dans un réseau optique selon l'une des revendications précédentes en combinaison avec la revendication 5, l'action de signaux de blocage au niveau de points de fusion le long d'une connexion de protection étant réalisée par des commutateurs sélectifs en longueur d'onde, WSS, (7).

11. Commutateur sélectif en longueur d'onde, WSS, (7) comprenant une pluralité d'entrées configurées pour recevoir des connexions de protection (P1, P2, P3) ayant au moins un chemin commun partiel et une sortie configurée pour transmettre des connexions de protection (P1, P2, P3) ledit WSS comprenant également des moyens configurés pour produire une accumulation d'au moins deux signaux correspondant à des connexions de protection (P1, P2, P3) reçues sur les entrées, et des moyens configurés pour transmettre un signal résultant de ladite accumulation sur la sortie.

12. Commutateur sélectif en longueur d'onde, WSS, (7) selon la revendication 11, ledit WSS comprenant également des moyens configurés pour diffuser un signal reçu sur l'entrée à au moins deux sorties différentes.

13. Interconnexion optique, OXC, (9) comprenant au moins un commutateur sélectif en longueur d'onde, WSS, (7) selon la revendication 11, et au moins un commutateur sélectif en longueur d'onde, WSS, (7) selon la revendication 12, lesdits commutateurs sélectifs en longueur d'onde, WSS, (7), étant combinés pour permettre l'accumulation d'au moins deux signaux reçus sur une sortie commune et la diffusion d'un signal reçu sur au moins deux sorties différentes.
